(19) **Europäisches Patentamt / European Patent Office / Office européen des brevets**

(11) **EP 3 542 444 B1**

(12) # FASCICULE DE BREVET EUROPEEN

(45) Date de publication et mention de la délivrance du brevet:
**14.10.2020 Bulletin 2020/42**

(21) Numéro de dépôt: **17811630.7**

(22) Date de dépôt: **15.11.2017**

(51) Int Cl.:
**H02K 1/14** *(2006.01)*    **H02K 29/03** *(2006.01)*

(86) Numéro de dépôt international:
**PCT/FR2017/053128**

(87) Numéro de publication internationale:
**WO 2018/091824 (24.05.2018 Gazette 2018/21)**

(54) **STATOR POUR MACHINE ÉLECTRIQUE HAUTE VITESSE**

STATOR FÜR EINE ELEKTRISCHE HOCHGESCHWINDIGKEITSMASCHINE

STATOR FOR HIGH-SPEED ELECTRIC MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.11.2016 FR 1661084**

(43) Date de publication de la demande:
**25.09.2019 Bulletin 2019/39**

(73) Titulaire: **Moving Magnet Technologies**
**25000 Besançon (FR)**

(72) Inventeurs:
- **TONNELIER, Gilles**
  **25480 Ecole Valentin (FR)**
- **ANDRIEUX, Gaël**
  **2533 Evilard (CH)**
- **LE BESNERAIS, Jean**
  **59370 Mons en Baroeul (FR)**
- **SOURON, Quentin**
  **59000 Lille (FR)**

(74) Mandataire: **IP Trust**
**2, rue de Clichy**
**75009 Paris (FR)**

(56) Documents cités:
- **HESMONDHALGH D E ET AL: "Design and construction of a high-speed high-performance direct-drive handpiece", I.E.E. PROCEEDINGS-B/ELECTRIC POWER APPLICATIONS,, vol. 134, no. 6, 1 novembre 1987 (1987-11-01), pages 286-296, XP001454047,**
- **VLAD GRADINARU ET AL: "Hybrid analytical/FEM optimization design of SPMSM for refrigerator compressor loads", ELECTRICAL MACHINES AND POWER ELECTRONICS AND 2011 ELECTROMOTION JOINT CONFERENCE (ACEMP), 2011 INTERNATIONAL AEGEAN CONFERENCE ON, IEEE, 8 septembre 2011 (2011-09-08), pages 657-662, XP032352477, DOI: 10.1109/ACEMP.2011.6490677 ISBN: 978-1-4673-5004-4**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

**DOMAINE TECHNIQUE DE L'INVENTION**

L'invention se rapporte aux machines électriques tournantes et plus particulièrement à celles évoluant à haute vitesse, c'est-à-dire à des vitesses supérieures à 20 000 tours par minute (20 000 RPM).
La présente invention propose plus précisément un stator pour une telle machine haute vitesse qui permet un fonctionnement en minimisant avantageusement les vibrations et les émissions sonores de la machine électrique.
Les applications visées par l'invention sont typiquement, sans que cette liste soit exhaustive : pompe à air, aspiration de gaz dans l'automobile, aspirateur, turbocompresseur, respirateur, générateur.

**ETAT DE LA TECHNIQUE ANTERIEURE**

On connait, dans l'état de la technique, différentes solutions pour minimiser les émissions sonores d'une machine électrique tournante.
Par exemple, le document JP200634008 présente une solution consistant à séparer le stator en plusieurs blocs indépendants, ce qui permet de s'affranchir d'une fréquence de résonance induite par l'utilisation d'un stator monobloc. En effet, cette dernière solution est généralement pénalisée par les modes propres de résonance du stator qui se comporte comme un anneau.
Si cette solution de séparation physique peut s'avérer efficace, elle nécessite cependant une construction relativement complexe avec une grande maitrise des tolérances de positionnement.
Le document WO2016079449 propose l'utilisation de cavités sur l'arrière du stator favorisant un effet de corde qui amortit les ondes acoustiques créées dans le moteur. Il propose aussi la technique précédente de séparation du stator en plusieurs blocs.
De même que précédemment, cette solution peut s'avérer efficace, mais elle nécessite cependant une construction relativement complexe avec une grande maitrise des tolérances de positionnement. Elle nécessite aussi un boitier extérieur pour tenir le stator.
Le document US6777842 propose, lui, d'ajouter des aimants sur le rotor afin de contrer les effets de saillance de la machine. Cette solution implique une masse d'aimant plus importante et elle est utilisée seulement pour contrer le bruit du moteur. La performance globale du moteur est aussi impactée par ces aimants additionnels.
On trouve aussi le document DE19960088 qui présente une autre solution pour l'homme de métier : ajouter une frette ou un boitier extérieur avec la présence d'une matière amortissante de type élastomère. Cette solution impose donc l'ajout d'une ou deux pièces supplémentaires au stator. Le réglage fin de ces élastomères en épaisseur, qualités physiques et positionnement reste assez difficile.
Enfin, on trouve le document WO2013044824 qui propose une solution d'encapsulation du moteur électrique dans un carter comprenant des enveloppes intérieure et extérieure. Cette solution, vraisemblablement efficace pour limiter les émissions sonores du moteur, impose des pièces supplémentaires, une construction complexe et un encombrement peu favorable.
Ces dispositifs de l'état de l'art, qui ont pour objet de limiter la propagation du bruit causé par la machine électrique tournante, présentent tous des inconvénients, que ce soit donc par l'ajout d'éléments supplémentaires de construction au stator, complexifiant la construction et le coût de la machine, ou par des constructions en plusieurs blocs qui complexifient la construction globale et la maîtrise des tolérances.
La publication suivante, HESMONDHALGH D E ET AL, "Design and construction of a high-speed high-performance direct-drive handpiece", I.E.E. PROCEEDINGS-B/ELECTRIC POWER APPLICATIONS, vol. 134, no. 6, 1 novembre 1987 (1987-11-01), pages 286-296, divulgue un stator pour machine à haute vitesse.

**EXPOSE DE L'INVENTION**

La présente invention vise à pallier les inconvénients de l'état de la technique en proposant un stator pour machine électrique tournante monobloc dont les dimensions relatives sont originales par rapport à l'état de l'art.
Un des objets de l'invention est de permettre la minimisation des émissions sonores des machines électriques tournant à des vitesses supérieures à 20000 tours/min et ayant des diamètres extérieurs supérieurs à 18 mm, taille évaluée comme critique, en-dessous de laquelle les grandes rigidités de structure ne produisent pas d'émissions sonores nuisibles.
De par le caractère de haute vitesse spécifiée, l'invention se limite à l'utilisation de machine électrique, typiquement triphasée avec un nombre de paires de pôles aimantés au rotor limité à 1 ou 2 et un nombre de dents au stator limité à 3 ou 6.
Plus particulièrement, l'invention concerne une machine électrique selon la revendication 1 (moteur ou générateur) à haute vitesse, supérieure à 20 000 tours par minute, comportant un rotor présentant 1 ou 2 paires de pôles aimantés et un stator amélioré de diamètre extérieur supérieur à 18 millimètres présentant 3 ou 6 dents droites s'étendant radialement et supportées par une couronne annulaire périphérique monobloc, une partie au moins des dents portant des bobines, lesdites dents étant solidaires les unes des autres et formant entre elles un ensemble planaire monobloc caractérisé en ce que les dents bobinées présentent une section rectangulaire de largeur l et de longueur L, avec $\frac{l}{L^2} \geq 20,$ exprimés en unités SI, afin de repousser la fréquence de résonance de chaque dent au-delà du spectre audible, typiquement ≥ 16 kHz.

Ladite couronne périphérique présente une épaisseur (ep) et un diamètre extérieur (dext) tels que

$$\frac{1220 \sqrt{-\sqrt{25-\frac{131ep^2}{(dext-ep)^2}-\frac{8ep^2}{(dext-ep)^2}+5}}}{dext-ep} \geq 16000,$$ exprimés en unités SI.

Dans un mode particulier, les dents sont liées entre elles par ladite couronne périphérique et sont équipées de 3 bobines et 6 dents, une dent sur deux portant une bobine.

Les justifications et intérêt de ces caractéristiques revendiquées sont explicités dans la description des figures qui permettent de mieux appréhender l'invention.

## BREVE DESCRIPTION DES FIGURES

D'autres caractéristiques et avantages de l'invention ressortiront à la lecture qui suit d'exemples de réalisation détaillés, en référence aux figures annexées qui représentent respectivement :

- la figure 1, une vue en perspective d'une machine électrique selon l'invention dans un premier mode de réalisation ;
- la figure 2, une vue de face isolée d'un stator de machine électrique de l'état de l'art ;
- la figure 3, une vue de face isolée du stator du dispositif de la figure 1 ;
- la figure 4, une vue de face en comparaison des stators des dispositifs en figures 2 et 3 ;
- la figure 5, un graphique présentant l'évolution de l'épaisseur de couronne du stator en fonction du diamètre extérieur du stator d'une machine électrique ;
- la figure 6, un graphique permettant la comparaison des émissions acoustiques entre une machine électrique de l'état de l'art et une machine électrique selon l'invention.

## DESCRIPTION DETAILLEE D'UN MODE DE REALISATION

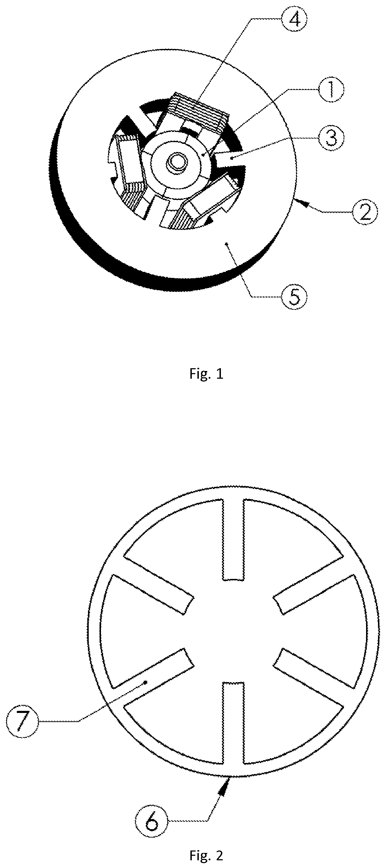

La figure 1 représente une vue en perspective d'une machine électrique selon l'invention dans un premier mode de réalisation. La machine comporte un rotor (1) présentant 2 paires de pôles aimantés, un stator amélioré (2) présentant 6 dents (3) droites et sans épanouissement polaire, permettant l'insertion de bobines (4), réalisées hors du moteur, par l'intérieur du stator amélioré (2). Ces dents (3) forment entre elles un ensemble monobloc et sont liées par une couronne monobloc (5). Les dents (3) sont équipées de 3 bobines (4). Comme illustré en figure 1, une dent (3) sur deux portes une bobine (4), mais cela n'est pas limitatif, ni le nombre de paires de pôles.

De manière générale, il sera avantageux de réaliser le stator amélioré (2) par un empilement de tôles (par exemple en alliage de Fer et Silicum) mais il peut être aussi envisagé une réalisation du stator amélioré (2) en une pièce massive, par exemple dans un matériau de type Somaloy SMC ou bien dans un matériau amorphe.

La figure 2 représente une vue en coupe transversale d'un stator selon l'art antérieur comportant 6 dents droites longues (7). Cette réalisation est par exemple telle qu'incitée par le document FR2945388. Cette structure est optimisée magnétiquement en ce que les sections de circulation de flux magnétique de la couronne magnétique (6) sont dimensionnées pour éviter la saturation magnétique des tôles tout en minimisant l'encombrement. De même, la longueur des dents (7) est optimisée pour maximiser le volume utile pour les bobines (non montrées) insérées sur ces dents (7) tout en limitant l'encombrement. Ces caractéristiques, sont évidentes pour l'homme de métier : une faible épaisseur radiale de couronne magnétique (6) et des dents (7) relativement longues par rapport à cette épaisseur.

Cependant, l'application de tels enseignements conduisent à des nuisances lorsqu'utilisés pour une machine tournant à haute vitesse (typiquement > 20 000 tours/min). En effet, la structure ainsi dimensionnée est souple et sensible aux forces d'excitation magnétiques générées par l'interaction entre les pôles aimantés au rotor (ici non montré) et le stator amélioré (2). Les efforts magnétiques induisent en effet deux problèmes :

- la couronne (6) qui relie les dents étant fine et souple, elle est sujette à une flexion (majoritairement radiale) qui va exciter les différents modes propres de l'anneau ainsi crée par la couronne (6) du stator amélioré (2), dans des fréquences basses inférieures à la vitesse maximale du moteur,

- les dents (7) étant longues, elles sont sujettes à une flexion (majoritairement tangentielle) dont l'amplitude peut être importante, par résonance mécanique, dans des fréquences inférieures à celles générées magnétiquement par la rotation du rotor.

Les fréquences générées magnétiquement par la rotation du rotor dépendent du nombre N de paires de pôles aimantés. Par exemple, avec N=2, comme on le voit en figure 1, il y a quatre alternances d'aimants et donc quatre alternances de force s'appliquant sur les dents (3) du stator amélioré (2). Cette alternance de force, en considérant les harmoniques contenus, constitue la source d'excitation fréquentielle des dents (3). L'invention est ainsi limitée à un nombre de paires de pôles inférieur ou égal à deux. Un nombre plus élevé induit des fréquences d'excitation supérieures qui sont moins pénalisantes pour les émissions sonores de la machine.

Quel que soit le nombre de paires de pôles au rotor (1), les harmoniques d'excitation, même de faible amplitude énergétique, peuvent causer des vibrations forcées qui excitent dents et couronne jusqu'à des fréquences de 16 à 18 kHz, fréquences audibles par l'homme et perçues comme une nuisance.

La couronne (6) et les dents (7) sont donc susceptibles de rentrer en résonance et d'occasionner des oscillations importantes qui vont donc générer du bruit.

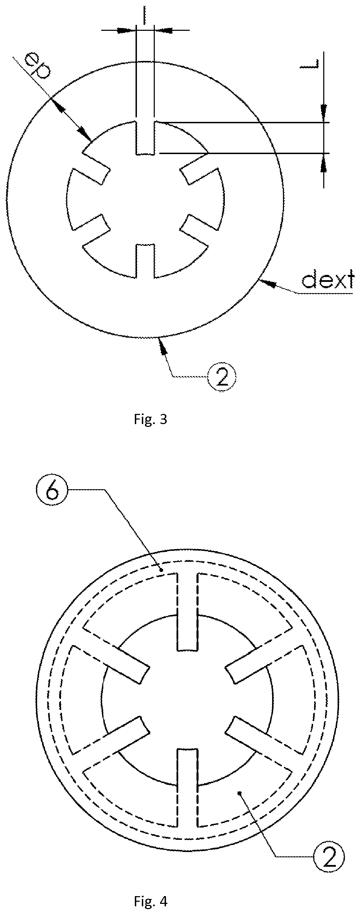

La figure 3 représente une vue en coupe transversale d'un stator selon l'invention. Y sont définis des paramètres de conception tels que le diamètre extérieur de stator (dext), l'épaisseur de couronne (ep) du stator amélioré (2), la largeur de dent (l) et la longueur de dent (L). Le stator amélioré (2) est réalisé de manière à ce que le comportement dynamique (loi de couple/vitesse) de la machine électrique soit similaire à celui d'une machine utilisant un stator semblable à celui de la figure 2.

De manière surprenante, il a en effet été observé que des choix non évidents pour l'homme de métier se sont révélés non pénalisant pour la dynamique de la machine (loi de couple/vitesse) tout en permettant une amélioration notable de l'émission sonore pendant le fonctionnement. Ces choix, l'épaississement des sections de passage magnétique, non utile lorsque seule la saturation magnétique est considérée, ainsi que des longueurs de dents faibles, a priori pénalisant pour le volume de bobine admissible, se sont en définitif révélés intéressants sur ces deux critères de dynamique et d'émission sonore. Ces choix de dimensionnement, non incités par l'état de l'art, permettent que les fréquences sensibles (modes de résonance) de la structure - couronne (5) et dents (3) - soient repoussées dans une bande de fréquence acceptable pour l'oreille (supérieure à 16 kHz) et les amplitudes de déformations réduites à un niveau sonore tolérable par l'oreille humaine.

La longueur L et la largeur de dent l sont choisies de manière à respecter la relation $\frac{l}{L^2} \geq 20,$ afin de repousser la fréquence de résonance de chaque dent au-delà du spectre audible, typiquement $\geq$ 16 kHz.

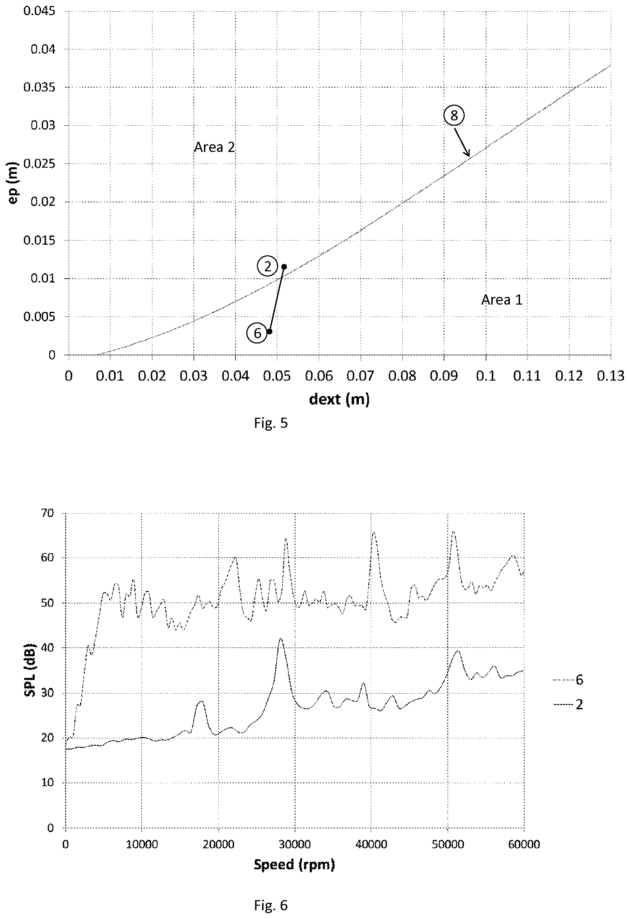

La figure 4 représente la comparaison géométrique entre un stator issu de l'art antérieur (6) et un stator selon l'invention (2). Le résultat est surprenant pour l'homme de métier voulant dimensionner une machine électrique et qui cherche à avoir une couronne magnétique mince pour minimiser les pertes liées à la variation de champ dans le fer du stator et maximiser la quantité de cuivre des bobines. En effet, les performances acoustiques générées par l'utilisation du stator amélioré (2) sont très nettement améliorées par rapport à l'utilisation du stator de l'état de l'art (6) comme présenté figure 6, alors que les propriétés dynamiques de la structure sont sensiblement équivalentes. Notamment dû au fait que la quantité de fer présent dans la couronne (5) du stator amélioré (2) est plus grande que celle dans la couronne (8) du stator de l'état de l'art (6), la densité de flux moyenne est très nettement réduite et les pertes fer (par hystérésis et courants de Foucaut) le sont également. La perte de volume de bobine est ainsi compensée.

Ces nouvelles règles de conception permettent ainsi, de manière surprenante, de réaliser une machine électrique dont les performances dynamiques sont similaires à celles d'une machine de l'état de l'art tout en minimisant les émissions sonores lors du fonctionnement. Cela rend ainsi possible une réalisation du stator amélioré (2) en un ensemble monobloc continu si l'on considère chaque tôle du stator amélioré (2) - cas de réalisation en paquet de tôles- ou si l'on considère un ensemble massif -cas de réalisation avec une matière de type amorphe.

La figure 5 représente un graphique montrant une courbe (8) liant l'épaisseur de la couronne (ep) de stator en fonction du diamètre extérieur (dext) du stator. Une zone de conception (Area 1) est définie en dessous de la courbe (8) et une autre zone (Area 2) est définie au-dessus de la courbe (8). La courbe (8) est une courbe d'iso fréquence à 16kHz. Tout point situé au-dessus de cette courbe (8) correspond à une machine au dimensionnement acceptable dont les modes de résonance (modes d'anneau) sont supérieurs à 16 kHz. L'expression des paramètres (ep) et (dext) acceptables est lié à la fréquence de 16 kHz par la relation :

$$\frac{1220\sqrt{-\sqrt{25-\frac{131ep^2}{(dext-ep)^2}}-\frac{8ep^2}{(dext-ep)^2}+5}}{dext-ep} \geq 16000$$

Tout point situé au-dessous de cette courbe (8) correspond à une machine dont les modes de résonance (modes d'anneau) sont inférieurs à 16 kHz. Le choix des 16 kHz est lié à une limite basse minimale admissible. Ainsi, pour dimensionner une machine dont le mode d'anneau soit acoustiquement optimisé, il convient de choisir un couple (ep), (dext) situé au-dessus de la courbe (8). Un exemple d'amélioration acoustique est représenté en passant de la machine électrique de l'art antérieur présentant un stator de l'état de l'art (6) à une machine électrique, objet de l'invention, présentant un stator amélioré (2) avec des performances dynamiques sensiblement identiques. La machine électrique ayant un stator amélioré (2) présente ainsi des performances acoustiques améliorées en comparaison avec la machine électrique ayant un stator de l'état de l'art (6). Cela est mieux visualisé encore en figure 6.

La figure 6 représente l'évolution du niveau sonore mesuré (SPL) à 1m de distance de deux machines électriques, en mode moteur, présentant un stator amélioré (2) et un stator de l'état de l'art (6), en fonction de la vitesse de rotation du moteur (rpm). Ces deux moteurs ont été sélectionnés de telle sorte que les moteurs associés aient des performances dynamiques équivalentes et ils ont été mesurés acoustiquement lors d'une accélération puis du maintien d'une vitesse stabilisée. On remarque une amélioration notable en termes d'émission acoustique puisque le gain dépasse les 20 dB.

## Revendications

1. Machine électrique à haute vitesse, supérieure à 20 000 tours par minute, comportant un rotor (1) présentant 1 ou 2 paires de pôles aimantés et un stator amélioré (2) de diamètre extérieur supérieur à 18 millimètres présentant 3 ou 6 dents (3) droites, sans épanouissements polaires, s'étendant radialement et supportées par une couronne annulaire périphérique monobloc (5), une partie au moins des dents (3) portant des bobines (4), lesdites dents (3) étant solidaires les unes des autres et formant entre elles un ensemble planaire monobloc, les dents (3) bobinées présentant une section rectangulaire de largeur I et de longueur L dans un plan perpendiculaire à l'axe de rotation de la machine, avec $\frac{l}{L^2} \geq 20$, ladite couronne périphérique (5) présentant une épaisseur (ep) et un diamètre extérieur (dext) tels que $\frac{1220\sqrt{-\sqrt{25-\frac{131ep^2}{(dext-ep)^2}}-\frac{8ep^2}{(dext-ep)^2}+5}}{dext-ep} \geq 16000,$ exprimés en unités SI.

2. Machine électrique à haute vitesse selon la revendication 1 **caractérisée en ce que** les dents (3) sont liées entre elles par ladite couronne périphérique (5) et sont équipées de 3 bobines (4) et 6 dents (3), une dent (3) sur deux portant une bobine (4).

## Patentansprüche

1. Elektrische Hochgeschwindigkeitsmaschine mit mehr als 20 000 Umdrehungen pro Minute, umfassend einen Rotor (1) mit 1 oder 2 Paaren von magnetischen Polen und einen verbesserten Stator (2) mit einem Außendurchmesser von mehr als 18 mm, mit 3 oder 6 polschuhlosen geraden Zähnen (3), die sich radial erstrecken und von einem einstückigen ringförmigen Mantelring (5) getragen werden, wobei mindestens einige der Zähne (3) Wicklungen (4) tragen, wobei die Zähne (3) fest miteinander verbunden sind und miteinander eine einstückige ebene Anordnung bilden, wobei die bewickelten Zähne (3) einen Rechteckquerschnitt aufweisen, dessen Breite I und Länge L in einer zur Drehachse der Maschine senkrechten Ebene liegen, mit $\frac{l}{L^2} \geq 20$, wobei der Mantelring (5) eine solche Dicke (ep) und einen solchen Außendurchmesser (dext) aufweist, dass, ausgedrückt in SI-Einheiten,

$$\frac{1\,220\sqrt{-\sqrt{25-\frac{131ep^2}{(dext-ep)^2}-\frac{8ep^2}{(dext-ep)^2}+5}}}{dext-ep} \geq 16\,000$$

.

**2.** Elektrische Hochgeschwindigkeitsmaschine nach Anspruch 1, **dadurch gekennzeichnet, dass** die Zähne (3) durch den Mantelring (5) miteinander verbunden sind und mit 3 Wicklungen (4) und 6 Zähnen (3) ausgestattet sind, wobei jeder zweite Zahn (3) eine Wicklung (4) trägt.

**Claims**

**1.** High-speed electric machine, operating at greater than 20,000 revolutions per minute, comprising a rotor (1) having one or two pairs of magnetized poles and an improved stator (2) having an external diameter greater than 18 millimeters and having three or six straight teeth (3), without pole shoes, which teeth extend radially and are supported by an integral, peripheral, annular ring (5), at least some of the teeth (3) carrying coils (4), said teeth (3) being rigidly connected to one another and forming between them an integral planar assembly, the coiled teeth (3) having a rectangular cross section of width I and length L in a plane perpendicular to the axis of rotation of the machine, where $\frac{1}{L^2} \geq 20$, said peripheral ring (5) having a thickness (ep) and an external diameter (dext) such that

$$\frac{1{,}220\sqrt{-\sqrt{25-\frac{131ep^2}{(dext-ep)^2}-\frac{8ep^2}{(dext-ep)^2}+5}}}{dext-ep} \geq 16{,}000,$$ expressed in SI units.

**2.** High-speed electric machine according to claim 1, **characterized in that** the teeth (3) are connected to one another by said peripheral ring (5) and are provided with three coils (4) and six teeth (3), one tooth (3) in every two carrying a coil (4).

EP 3 542 444 B1

Fig. 1

Fig. 2

Fig. 3

Fig. 4

Fig. 5

Fig. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 200634008 B
- WO 2016079449 A
- US 6777842 B
- DE 19960088
- WO 2013044824 A
- FR 2945388

**Littérature non-brevet citée dans la description**

- **HESMONDHALGH D E et al.** Design and construction of a high-speed high-performance direct-drive handpiece. *I.E.E. PROCEEDINGS-B/ELECTRIC POWER APPLICATIONS,* 01 Novembre 1987, vol. 134 (6), 286-296